# DEMANDE DE BREVET EUROPEEN

(11) **EP 2 716 526 A1**
(43) Date de publication de la demande: **09.04.2014**
(21) Numéro de dépôt: 13183541.5
(22) Date de dépôt: 09.09.2013
(51) Int. Cl.: B62D 25/14

(54) **Traverse de planche de bord pour vehicule automobile, constituee par un tube pourvu d'ouvertures**

(30) Priorité: 03.10.2012 FR 1259381
(71) Demandeur: PEUGEOT CITROËN AUTOMOBILES SA, 78140 Velizy-Villacoublay (FR)
(72) Inventeur: Appasamy, Jean Michel, 78760 Jouars Pontchartrain (FR); Hochart, Olivier, 62980 Noyelles Les Vermelles (FR); Dumont, François, 59112 Carnin (FR)

(57) **Abrégé**

Traverse de planche de bord pour véhicule automobile constituée par un tube (1) en matériau rigide qui comporte à chacune de ses deux extrémités opposées (1 a, 1 b) des moyens pour fixer la traverse à une partie de la caisse du véhicule, caractérisée en ce que la partie dudit tube (1) qui est destinée à s'étendre devant le passager avant du véhicule comporte des ouvertures (7).

## Description

La présente invention concerne une traverse de planche de bord pour véhicule automobile.

La traverse de la planche de bord d'un véhicule automobile est généralement constituée par un tube qui s'étend entre les deux côtés d'habitacle devant les occupants avant du véhicule.

Ce tube participe à la rigidité de la caisse du véhicule et comporte à chacune de ses deux extrémités opposées des moyens pour fixer la traverse à la caisse du véhicule.

Cette traverse sert également à supporter la colonne de direction et la planche de bord.

Le brevet français 2 881 393 décrit une traverse de planche de bord métallique dont la section transversale comporte une partie de forme en U et une partie de forme carrée.

Cette traverse comporte sur toute sa longueur des ouvertures destinées à l'alléger.

Ces ouvertures présentent cependant l'inconvénient de réduire la résistance de la traverse aux chocs, en particulier latéraux.

Le but de la présente invention est de remédier aux inconvénients ci-dessus.

Ce but est atteint, selon l'invention, grâce à une traverse de planche de bord pour véhicule automobile constituée par un tube en matériau rigide qui comporte à chacune de ses deux extrémités opposées des moyens pour fixer la traverse à une partie de la caisse du véhicule, **caractérisée en ce que** la partie dudit tube qui est destinée à s'étendre devant le passager avant du véhicule comporte des ouvertures.

Ainsi, la partie du tube qui est destinée à s'étendre devant le conducteur et qui supporte par conséquent la colonne de direction est dépourvue d'ouvertures.

De ce fait, seule la partie du tube qui est destinée à s'étendre devant le passager avant comporte des ouvertures.

Etant donné que, contrairement à la traverse décrite dans le brevet FR 2 881 393, les ouvertures de la traverse selon l'invention ne sont pas réalisées sur toute la longueur de cette traverse, ces ouvertures ont une incidence moindre à l'égard de la résistance mécanique de la traverse tout en réduisant la masse de celle-ci.

Le mérite de l'invention réside dans le fait d'avoir choisi de ne réaliser des ouvertures que sur la partie du tube qui est destinée à s'étendre devant la place du passager avant.

Ce choix résulte du fait que cette partie n'a pas besoin d'être aussi résistante que l'autre partie du tube, car celle-ci supporte la colonne de direction.

De préférence, lesdites ouvertures sont alignées dans la direction longitudinale du tube.

Cette disposition est favorable à l'égard de la rigidité de la traverse.

Dans un mode de réalisation particulièrement avantageux de l'invention, ladite partie du tube comporte quatre rangées alignées d'ouvertures.

Ces quatre rangées d'ouvertures permettent de réduire significativement la masse de la traverse sans pour autant réduire trop fortement sa résistance.

Le tube peut présenter une section transversale circulaire et les rangées d'ouvertures peuvent être espacées angulairement de 90°.

De préférence, les ouvertures sont réalisées sur la moitié de la longueur du tube, autre que celle qui doit supporter la colonne de direction.

De préférence également, le nombre et les dimensions des ouvertures sont tels que celles-ci permettent de réduire d'au moins 5% la masse de la traverse.

Les ouvertures du tube peuvent être réalisées par poinçonnage, perçage ou découpe laser.

Dans un mode de réalisation avantageux de l'invention, le tube est supporté par une jambe de force qui est fixée sensiblement au tiers du tube et à un angle compris entre 90 et 100° par rapport à celui-ci, cette jambe de force étant ajourée.

Le fait que la jambe de force soit ajourée permet de réduire encore davantage la masse de l'ensemble traverse et jambe de force.

Le tube peut être en acier.

Selon un autre aspect, l'invention concerne également un véhicule automobile équipé d'une traverse de planche de bord selon l'invention.

D'autres particularités et avantages de l'invention apparaîtront encore tout au long de la description ci-après.

Aux dessins annexés, donnés à titre d'exemples, non limitatifs :
- la figure 1 est une vue en perspective d'une traverse de planche de bord selon l'invention équipée d'une colonne de direction et d'une jambe de force,
- la figure 2 est une autre vue en perspective de la traverse de planche de bord, représentée sur la figure 1, cette traverse n'étant pas équipée de la colonne de direction.

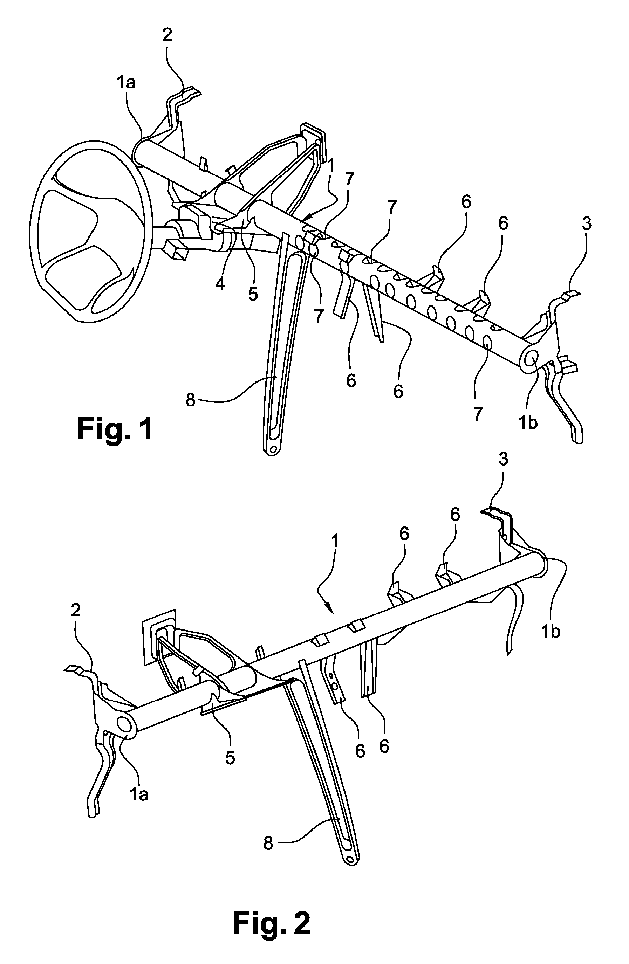

Les figures 1 et 2 représentent une traverse de planche de bord pour véhicule automobile constituée par un tube 1 en matériau rigide tel que l'acier.

Ce tube 1 comporte à chacune de ses deux extrémités opposées 1a, 1b des pattes de fixation 2, 3 pour fixer la traverse à une partie non représentée de la caisse du véhicule.

Le tube 1 comporte deux parties s'étendant respectivement sur la moitié de la longueur de la traverse.

La première moitié s'étend entre l'extrémité 1a et le milieu du tube 1.

Cette première moitié du tube 1 est destinée à s'étendre devant la place du conducteur et supporte la colonne de direction 4 grâce à des moyens de fixation 5.

La seconde moitié du tube 1 est destinée à s'étendre devant la place du passager avant et porte des pattes de fixation 6.

Cette seconde moitié du tube 1 s'étend par conséquent entre le milieu du tube 1 et l'extrémité 1b de ce dernier.

Conformément à l'invention, la partie du tube 1 qui est destinée à s'étendre devant le passager avant du véhicule comporte des ouvertures 7.

Ces ouvertures 7 sont alignées dans la direction longitudinale du tube 1 suivant quatre rangées parallèles.

Dans l'exemple représenté, le tube 1 est de section transversale circulaire et les rangées d'ouvertures 7 sont espacées angulairement de 90°.

Cette disposition permet de réaliser sur la moitié du tube 1 autre que celle qui supporte la colonne de direction 4 un grand nombre d'ouvertures 7, sans réduire significativement la résistance du tube 1 aux chocs, notamment latéraux.

Le nombre et les dimensions des ouvertures 7 sont de préférence tels que celles-ci permettent de réduire d'au moins 5% la masse de la traverse.

Les ouvertures 7 peuvent être réalisées par poinçonnage, perçage ou découpe laser.

A titre d'exemple, un tube 1 comportant sur une moitié de sa longueur quarante trous de diamètre égal à 30 mm présente une masse qui est réduite de 12% par rapport à celle d'un tube dépourvu d'ouvertures.

Dans le mode de réalisation représenté sur les figures 1 et 2, le tube 1 est supporté par une jambe de force 8 qui est fixée sensiblement au tiers du tube 1 et à un angle compris entre 90° et 100° par rapport àcelui-ci.

Cette jambe de force 8 est ajourée, ce qui permet de réduire encore davantage la masse de l'ensemble tube 1 et jambe de force.

Les calculs ont montré que le fait d'ajourer la jambe de force 8 permettait de réduire de 1,3% la masse de la traverse.

La réduction de masse obtenue grâce à l'invention permet de réduire la masse totale du véhicule et par conséquent la consommation en carburant de celui-ci.

La réduction de masse de la traverse ne réduit pas significativement sa résistance au chocs frontaux et latéraux, notamment du fait que les ouvertures 7 sont réalisées seulement sur la moitié de la longueur du tube 1, à savoir la moitié autre que celle qui supporte la colonne de direction.

Par ailleurs, les ouvertures 7 réalisées sur le tube 1 n'ont aucune influence néfaste sur la fréquence des vibrations engendrées au niveau de la colonne de direction.

Dans l'exemple représenté sur les figures 1 et 2, la partie gauche du tube 1 supporte la colonne de direction et la partie droite de ce tube présente les ouvertures 7.

Bien entendu dans le cas d'une traverse pour véhicule dont la direction est à droite, les ouvertures 7 du tube 1 seront réalisées sur la partie gauche de celui-ci.

## Revendications

1. Traverse de planche de bord pour véhicule automobile constituée par un tube (1) en matériau rigide qui comporte à chacune de ses deux extrémités opposées (1a, 1b) des moyens pour fixer la traverse à une partie de la caisse du véhicule, **caractérisée en ce que** la partie dudit tube (1) qui est destinée à s'étendre devant le passager avant du véhicule comporte quatre rangées alignées d'ouvertures (7).

2. Traverse de planche de bord selon la revendication 1, **caractérisée en ce que** lesdites ouvertures (7) sont alignées dans la direction longitudinale du tube (1).

3. Traverse de planche de bord selon la revendication 1 ou 2, **caractérisée en ce que** le tube (1) est de section transversale circulaire et les rangées d'ouvertures (7) sont espacées angulairement de 90°.

4. Traverse de planche de bord selon l'une des revendications 1 à 3, **caractérisée en ce que** les ouvertures (7) sont réalisées sur la moitié de la longueur du tube (1), autre que celle qui doit supporter la colonne de direction (4).

5. Traverse de planche de bord selon l'une des revendications 1 à 4, **caractérisée en ce que** le nombre et les dimensions des ouvertures (7) sont tels que celles-ci permettent de réduire d'au moins 5% la masse de la traverse.

6. Traverse de planche de bord selon l'une des revendications 1 à 5, **caractérisée en ce que** les ouvertures (7) sont réalisées par poinçonnage, perçage ou découpe laser.

7. Traverse de planche de bord selon l'une des revendications 1 à 6, **caractérisée en ce que** le tube (1) est supporté par une jambe de force (8) qui est fixée sensiblement au tiers du tube (1) et à un angle compris entre 90 et 100° par rapport à celui-ci, cette jambe de force (8) étant ajourée.

8. Traverse de planche de bord selon l'une des revendications 1 à 7, **caractérisée en ce que** le tube (1) est en acier.

9. Véhicule automobile équipé d'une traverse de planche de bord selon l'une des revendications 1 à 8.
